# EUROPEAN PATENT SPECIFICATION

(11) **EP 3 539 855 B1**
(45) Date of publication and mention of the grant of the patent: **19.08.2020**
(21) Application number: 19150318.4
(22) Date of filing: 04.01.2019
(51) Int. Cl.: B62J 17/06

(54) **SUPPORT FOR THE ENGINE CONTROL UNIT OF AN STRADDLED VEHICLE**
UNTERSTÜTZUNG DER MOTORSTEUERUNG EINES GRÄTSCHSITZFAHRZEUGS
SUPPORT POUR L'UNITE DE COMMANDE DE MOTEUR D'UN VEHICULE À ENFOURCHER

(30) Priority: 16.03.2018 JP 2018048706
(43) Date of publication of application: 18.09.2019
(73) Proprietor: YAMAHA HATSUDOKI KABUSHIKI KAISHA, Iwata-shi, Shizuoka 438-8501 (JP)
(72) Inventor: NISHIMURA, Takeshi, Iwata-shi, Shizuoka 438-8501 (JP)
(74) Representative: Grünecker Patent- und Rechtsanwälte PartG mbB

(56) References cited:
- JP-A- 2006 231 952

## Description

### BACKGROUND OF THE INVENTION

### 1. Field of the Invention

The present invention relates to a straddled vehicle.

### 2. Description of the Related Art

An engine control unit has been conventionally installed in a straddled vehicle in order to control an engine. For example, Published Japanese Translation of PCT International Patent Application No. 2017-507845 describes a motorcycle in which an engine control unit is disposed between a side box and a storage box. A straddled vehicle according to the preamble of independent claim 1 is disclosed in JP 2006-231952 A.

### SUMMARY OF THE INVENTION

In recent years, there has been a trend of increase in size of the engine unit due to high functionality or multi-functionality of controlling the straddled vehicle. Hence, there is concern of reduction in capacity of the storage box when the engine control unit is disposed between the side box and the storage box as described above.

To reliably produce the storage box with sufficient capacity, the engine control unit is preferably disposed forward of the storage box. In a type of straddled vehicle including a footboard, however, a space for putting the feet of a rider is produced in front of the storage box. Therefore, it is difficult to reliably produce a space for disposing the engine control unit in front of the storage box.

The inventor of the present invention examined a layout of the engine control unit disposed about a head pipe in a space between a front cover and a back cover (i.e., a space located behind the front cover and in front of the back cover). The front cover is disposed in front of the head pipe, whereas the back cover is disposed behind the head pipe. A storage space is disposed between the front cover and the back cover.

However, other components are disposed about the head pipe. Therefore, a large-sized engine control unit, when disposed about the head pipe, possibly restricts the layouts of the other components and deteriorates maintenance performance of the other components.

The inventor changed the perspective of the layout of the engine control unit, and focused on a region, located below the front end of the front cover, in the aforementioned storage space (this region will be referred to as "second storage space"). The second storage space is narrow in the back-and-forth direction because of a front wheel disposed ahead thereof. However, the second storage space extends in the right-and-left direction along the shape of the back cover extending in the right-and-left direction. Because of this, the inventor noticed that the second storage space is usable as the space for disposing the engine control unit when the engine control unit has a shape dimensioned to be greater in both the width and length directions thereof than in the thickness direction thereof. In more detail, the inventor conceived of a layout of the engine control unit disposed in the second storage space such that the thickness direction thereof is oriented along the vehicle back-and-forth direction. Accordingly, the engine control unit can be successfully accommodated in the second storage space so as to fit the shape of the second storage space. Additionally, when the engine control unit is disposed in the second storage space, a space can be reliably produced about the head pipe for laying out and maintaining the other components.

However, when the engine control unit is simply disposed in the second storage space, there is concern of increase in size of an exterior cover. For example, when a lower portion of the back cover is extended backward in order to dispose the engine control unit in the second storage space, this may possibly bring about deterioration in good ride comfort and good getting on/off performance, both of which are merits of a flat footboard. On the other hand, when the lower portion of the back cover is extended outward in the vehicle width direction in order to dispose the engine control unit in the second storage space, increase in size of the vehicle is inevitable in the vehicle width direction.

In view of the above, the inventor further conceived of a layout of the engine control unit disposed such that the thickness direction thereof is arranged obliquely to the vehicle back-and-forth direction as seen in a vehicle plan view. Specifically, the inventor conceived of a layout of the engine control unit disposed such that the rear end thereof is located inside the front end thereof in the vehicle width direction as seen in the vehicle plan view. With the layout described above, the lower portion of the back cover can be inhibited from being extended backward in comparison with the layout of the engine control unit that the thickness direction thereof is arranged in parallel to the vehicle back-and-forth direction. Additionally, the lower portion of the back cover can be inhibited from being extended outward in the vehicle width direction. Because of this, reduction in capacity of the storage box and increase in size of the vehicle can be avoided, and simultaneously, deterioration in both ride comfort and getting on/off performance can be inhibited.

A straddled vehicle according to an aspect of the present invention includes a vehicle body frame, an engine, a steering device, a storage box, a seat, an exterior cover and an engine control unit. The vehicle body frame includes a head pipe. The engine is supported by the vehicle body frame. The steering device is supported by the head pipe, and includes a front wheel disposed below the head pipe. The storage box is supported by the vehicle body frame, and is disposed backward of the front wheel. The seat is disposed directly above the storage box. The exterior cover at least in part overlaps the vehicle body frame as seen in a front view. The engine control unit controls the engine.

The exterior cover includes a front cover, a back cover, a bottom cover and a flat footboard. The front cover is disposed in front of the head pipe. The back cover is disposed behind the head pipe. The bottom cover is disposed behind the front wheel and in front of the back cover. The flat footboard extends backward from a lower end of the back cover.

The back cover includes an upper portion and a lower portion. The upper portion is located above a front end of the front cover. The lower portion is located below the front end of the front cover. The exterior cover includes a first storage space and a second storage space. The first storage space is formed in front of the upper portion and behind the front cover. The second storage space is formed in front of the lower portion and behind the bottom cover.

The engine control unit has a shape dimensioned to be greater in both a width direction thereof and a length direction thereof than in a thickness direction thereof. The engine control unit is disposed on one of right and left sides of a vehicle center in a vehicle width direction in the second storage space. The engine control unit is disposed such that the thickness direction thereof is arranged obliquely to a vehicle back-and-forth direction as seen in a vehicle plan view On a cross section taken orthogonally to an up-and-down direction to include the engine control unit, a rear end of the engine control unit is disposed further inward in the vehicle width direction than a front end of the engine control unit.

In the straddled vehicle according to the present aspect, the engine control unit is disposed in the second storage space inside the exterior cover. Hence, reduction in capacity of the storage box can be inhibited. Additionally, the engine control unit is disposed such that the thickness direction thereof is arranged obliquely to the vehicle back-and-forth direction. Hence, increase in size of the exterior cover can be inhibited. Consequently, increase in size of the vehicle can be avoided, while deterioration in both ride comfort and getting on/off performance can be inhibited.

The vehicle body frame may further include a down frame extending downward from the head pipe. The engine control unit may be disposed either rightward or leftward of the down frame in the second storage space. In this case, the exterior cover can be inhibited from being enlarged backward in comparison with when the engine control unit is disposed directly backward of the down frame. Consequently, increase in size of the vehicle can be avoided, while deterioration in both ride comfort and getting on/off performance can be inhibited.

The engine control unit, at least in part, may overlap the down frame in a vehicle side view. In this case, the down frame and the engine control unit can be compactly disposed in the back-and-forth direction. Accordingly, the exterior cover can be inhibited from being enlarged backward. Consequently, increase in size of the vehicle can be avoided, while deterioration in both ride comfort and getting on/off performance can be inhibited.

The front end of the engine control unit may be located forward of the down frame. In this case, the exterior cover can be inhibited from being enlarged backward. Accordingly, deterioration in both ride comfort and getting on/off performance can be inhibited.

The steering device may include a pair of right and left suspensions and an under bracket. The under bracket may support the pair of right and left suspensions. The engine control unit, at least in part, may be located below the under bracket. In this case, it is possible to avoid a situation that the engine control unit interferes with the movable range of the under bracket.

The engine control unit, at least in part, may be located below an upper end of the front wheel at a standstill. In this case, the engine control unit is disposed in as a low position as possible. Accordingly, a large space can be reliably produced above the engine control unit.

On the cross section taken orthogonally to the up-and-down direction to include the engine control unit, a lateral end portion of the back cover may be located further forward than a portion located in the middle, in the vehicle width direction, of the back cover . In this case, it is possible to expand a space located behind the lateral end portion of the back cover. Accordingly, it is possible to enhance both ride comfort and getting on/off performance.

The front end of the front cover may be located backward of a rotational axle of the front wheel. In this case, the first storage space is narrow. Hence, the layout of the engine control unit according to the present aspect works as effectively as possible.

The engine control unit may include a regulator. In this case, the engine control unit is increased in size. Hence, the engine control unit according to the present aspect works as effectively as possible.

The back cover may include an oil supply port. The engine control unit may be disposed on one of the right and left sides of the vehicle center in the vehicle width direction in the second storage space. The oil supply port may be disposed on the other of the right and left sides of the vehicle center in the vehicle width direction. In this case, the engine control unit can be disposed without narrowing the space for disposing the oil supply port.

The upper portion may include a main switch. The main switch and the engine control unit may be both disposed on one of the right and left sides of the vehicle center in the vehicle width direction. In this case, the engine control unit and the main switch can be compactly disposed.

The engine control unit may include a connector. The engine control unit may be disposed such that the connector is directed downward. In this case, water intrusion into the connector can be inhibited. Accordingly, even when disposed in a low position, the engine control unit can be inhibited from being affected by water.

The front cover may extend backward and upward from the front end thereof as seen in the vehicle side view. In this case, a space about the head pipe is likely to be reduced in capacity, whereby the significance of the present invention is enhanced.

### BRIEF DESCRIPTION OF THE DRAWINGS

FIG 1 is a side view of a straddled vehicle according to a preferred embodiment.
FIG. 2 is a front view of a front portion of the straddled vehicle.
FIG. 3 is an enlarged side view of the front portion of the straddled vehicle.
FIG 4 is a perspective view of an engine control unit.
FIG. 5 is a front view of the engine control unit.
FIG. 6 is a rear view of the engine control unit.
FIG 7 is a side view of the engine control unit.
FIG. 8 is a perspective view of a front body cover.
FIG 9 is a rear view of the front body cover.
FIG. 10 is a cross-sectional view of FIG 9 taken along line X-X.
FIG. 11 is a cross-sectional view of FIG 9 taken along line XI-XI.
FIG 12 is a rear view of a structure in the interior of the front body cover.
FIG. 13 is a side view of the structure in the interior of the front body cover.

### DETAILED DESCRIPTION OF THE PREFERRED EMBODIMENTS

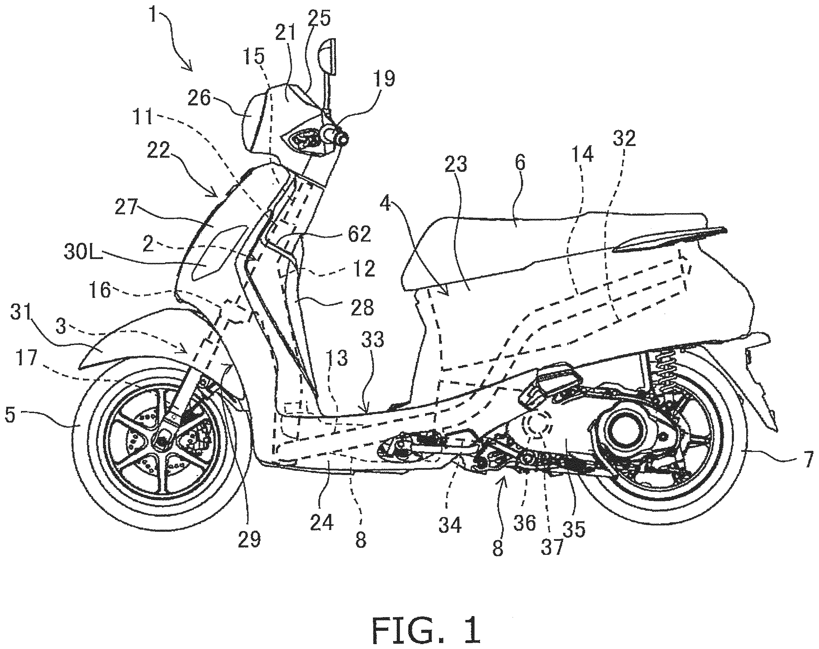

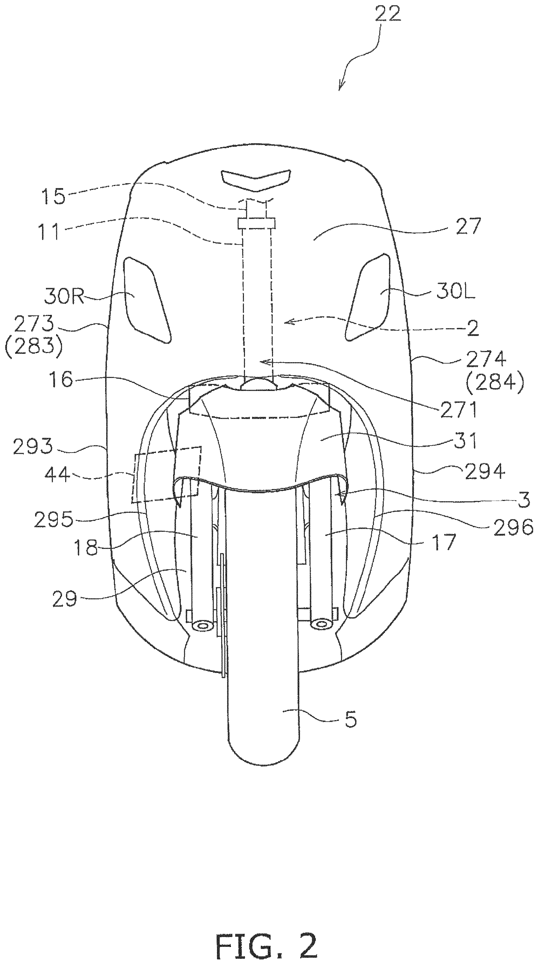

A straddled vehicle 1 according to a preferred embodiment will be hereinafter explained with reference to drawings. FIG. 1 is a side view of the straddled vehicle 1. FIG 2 is a front view of the straddled vehicle 1. The straddled vehicle 1 according to the present preferred embodiment is a scooter-type vehicle. As shown in FIG 1, the straddled vehicle 1 includes a vehicle body frame 2, a steering device 3, an exterior cover 4, a seat 6, a rear wheel 7 and a power unit 8.

It should be noted that in the present specification, a back-and-forth direction, an up-and-down direction and a right-and-left direction of the straddled vehicle 1 refer to the back-and-forth direction, the up-and-down direction and the right-and-left direction seen from a rider riding on the straddled vehicle 1. Additionally, the back-and-forth direction not only indicates directions arranged in parallel to the back-and-forth direction of the straddled vehicle 1, but also encompasses directions tilting within an angular range of ±45 degrees with respect to the back-and-forth direction of the straddled vehicle 1. In other words, a given direction closer to the back-and-forth direction than to the right-and-left direction and the up-and-down direction is classified as the back-and-forth direction.

Likewise, the up-and-down direction encompasses directions tilting within an angular range of ±45 degrees with respect to the up-and-down direction of the straddled vehicle 1. In other words, a given direction closer to the up-and-down direction than to the back-and-forth direction and the right-and-left direction is classified as the up-and-down direction. Moreover, the right-and-left direction encompasses directions tilting within an angular range of ±45 degrees with respect to the right-and-left direction of the straddled vehicle 1. In other words, a given direction closer to the right-and-left direction than to the back-and-forth direction and the up-and-down direction is classified as the right-and-left direction.

The vehicle body frame 2 includes a head pipe 11, a down frame 12, a lower frame 13 and a rear frame 14. The axis of the head pipe 11 extends backward and upward as seen in a vehicle side view. The down frame 12 extends downward from the head pipe 11. The lower frame 13 is connected to a lower portion of the down frame 12. The lower frame 13 extends backward from the lower portion of the down frame 12. The rear frame 14 is connected to the lower frame 13. The rear frame 14 extends backward and upward from a rear portion of the lower frame 13.

The steering device 3 is supported by the head pipe 11. The steering device 3 includes a front wheel 5, a steering shaft 15, an under bracket 16, a left suspension 17, a right suspension 18 and a handle 19. The front wheel 5 is disposed below the head pipe 11. The steering shaft 15 is inserted into the head pipe 11. The steering shaft 15 is supported by the head pipe 11 and is thereby turnable right and left. The steering shaft 15 is connected at an upper portion thereof to the handle 19.

The under bracket 16 is connected to the lower end of the steering shaft 15. The under bracket 16 is disposed directly below the head pipe 11. The right and left suspensions 18 and 17 are connected at the upper ends thereof to the under bracket 16. The front wheel 5 is rotatably supported by the right and left suspensions 18 and 17.

The exterior cover 4 includes a handle cover 21, a front body cover 22, a rear body cover 23 and a lower cover 24. The handle cover 21 covers the front and rear sides of the handle 19. A meter panel 25, including a tachometer and so forth, is attached to the upper surface of the handle cover 21. A headlight 26 is attached to the front surface of the handle cover 21.

The front body cover 22 is disposed directly below the handle cover 21. The front body cover 22 covers the surroundings of the head pipe 11 and the down frame 12. The front body cover 22 is disposed in front of and behind the head pipe 11 and the down frame 12. The front body cover 22 overlaps the head pipe 11 and the down frame 12 as seen in a vehicle front view. The front body cover 22 is connected at a lower portion thereof to the lower cover 24. The front body cover 22 includes a front cover 27, a back cover 28 and a bottom cover 29.

The front cover 27 is disposed directly below the handle cover 21. The front cover 27 is disposed in front of the head pipe 11. The front cover 27 overlaps the head pipe 11 as seen in the vehicle front view. A front end 271 of the front cover 27 is located backward of a rotational axle A1 of the front wheel 5. Flasher lights 30R and 30L are attached to the front cover 27.

The front cover 27 includes a front edge 272 extending upward and backward from the front end 271 as seen in the vehicle side view. The front cover 27 extends rightward and backward from the front edge 272 to a right end edge 273. Likewise, the front cover 27 extends leftward and backward from the front edge 272 to a left end edge 274.

The back cover 28 is disposed behind the front cover 27. The back cover 28 is disposed behind the head pipe 11 and the down frame 12. An inner space is produced between the front cover 27 and the back cover 28 so as to accommodate the head pipe 11.

The back cover 28 extends rightward and forward from a middle portion 60, located in the middle thereof in the vehicle width direction, to a right end edge 283. Likewise, the back cover 28 extends leftward and forward from the middle portion 60 to a left end edge 284. The back cover 28 (an upper portion 54) is connected at the right end edge 283 to the right end edge 273 of the front cover 27. The back cover 28 (the upper portion 54) is connected at the left end edge 284 to the left end edge 274 of the front cover 27.

The bottom cover 29 is disposed directly below the front cover 27. A front fender 31 and the front wheel 5 are disposed in front of the bottom cover 29. The front fender 31 is disposed directly above the front wheel 5. The back cover 28 is disposed behind the bottom cover 29.

As shown in FIG 1, the rear body cover 23 covers the surroundings of the rear frame 14. The seat 6 is disposed directly above the rear body cover 23. The seat 6 is disposed backward of the head pipe 11. A storage box 32 is disposed inside the rear body cover 23. The storage box 32 is supported by the vehicle body frame 2. The storage box 32 is disposed backward of the front wheel 5. The seat 6 is disposed directly above the storage box 32.

The lower cover 24 is disposed between the front body cover 22 and the rear body cover 23. The lower cover 24 covers the surroundings of the lower frame 13. The lower cover 24 is connected to the back cover 28 and the bottom cover 29. The upper surface of the lower cover 24 includes a flat footboard 33. The flat footboard 33 extends backward from the lower end of the back cover 28. The flat footboard 33 is disposed below and forward of the seat 6. The flat footboard 33 is disposed directly above the lower frame 13.

The flat footboard 33 is provided for allowing a rider to put his/her feet thereon. The flat footboard 33 has an entirely flat shape in the vehicle width direction. However, the flat footboard 33 may not have a completely flat shape. For example, the flat footboard 33 may be provided with an anti-slip embossed pattern.

The power unit 8 is disposed directly below the seat 6. The power unit 8 is pivotably supported by the vehicle body frame 2. The power unit 8 supports the rear wheel 7 such that the rear wheel 7 is rotatable. The power unit 8 includes an engine 34 and a transmission 35.

The engine 34 is disposed directly below the seat 6. The engine 34 is disposed directly below the storage box 32. A starter motor 36 is attached to the engine 34. The starter motor 36 starts the engine 34. The starter motor 36 is attached to a crankshaft 37 of the engine 34. In the present preferred embodiment, the starter motor 36 is a starter motor generator that functions as both a starter motor for starting the engine 34 and a power generator for generating electricity by the driving force of the engine 34.

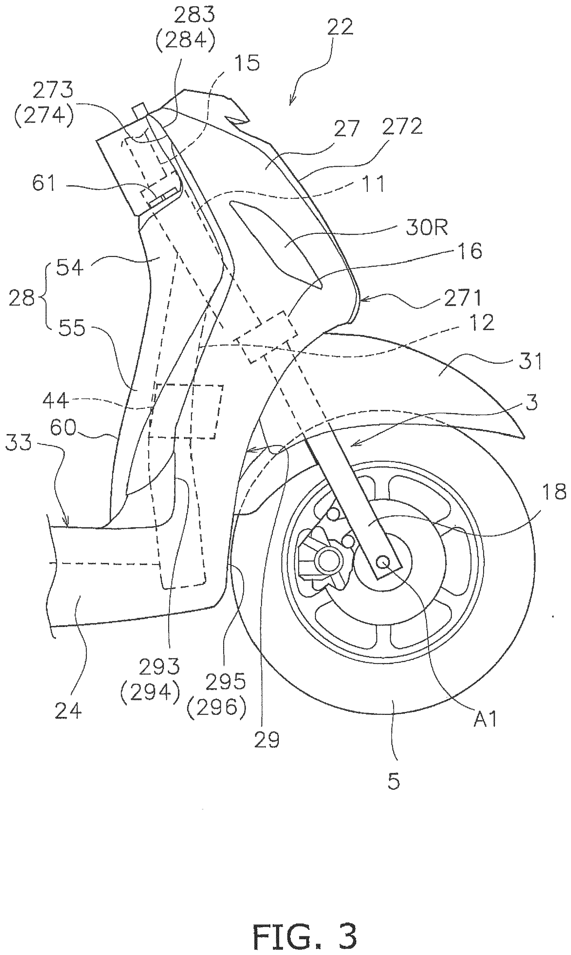

FIG. 3 is an enlarged side view of a front portion of the straddled vehicle 1. As shown in FIGS. 2 and 3, the straddled vehicle 1 includes an engine control unit 44. The engine control unit 44 is disposed in the inner space of the front body cover 22. The engine control unit 44 controls the engine 34. For example, the engine control unit 44 controls fuel injection and ignition timing in the engine 34.

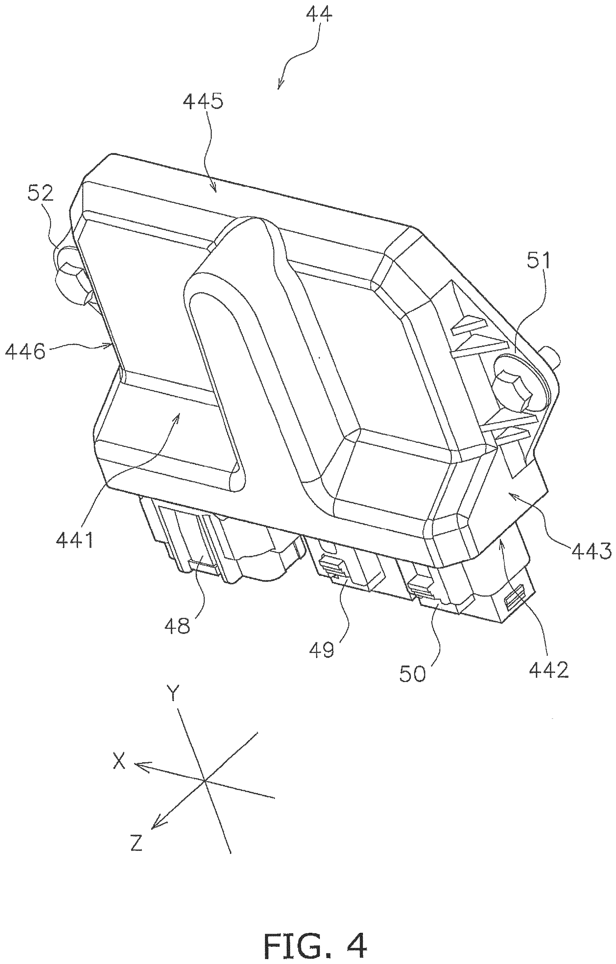

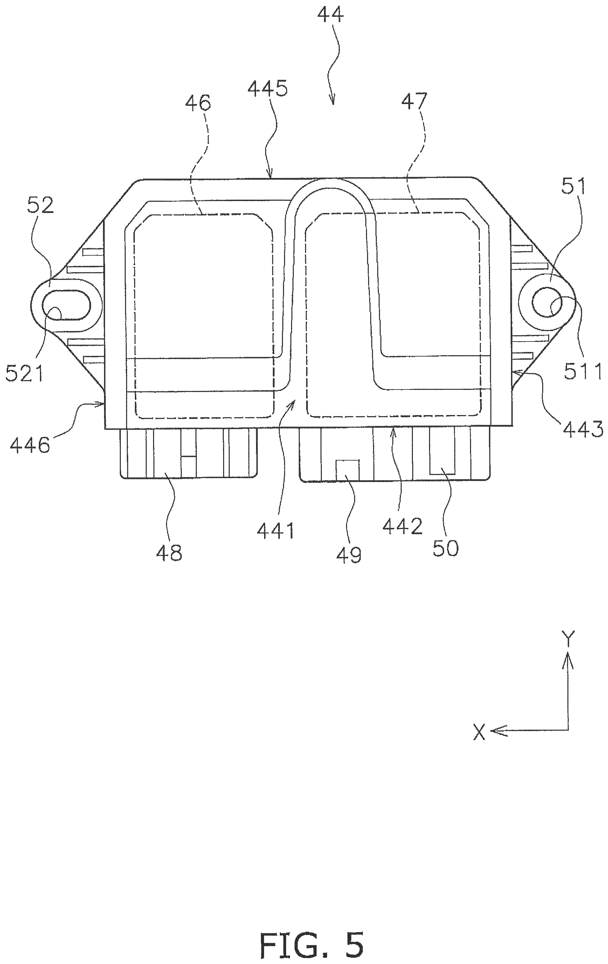

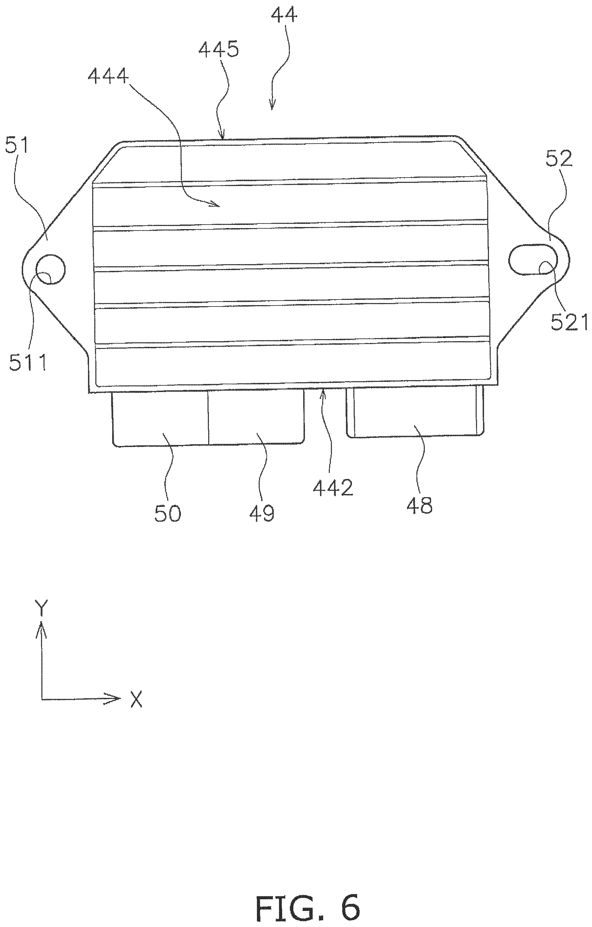

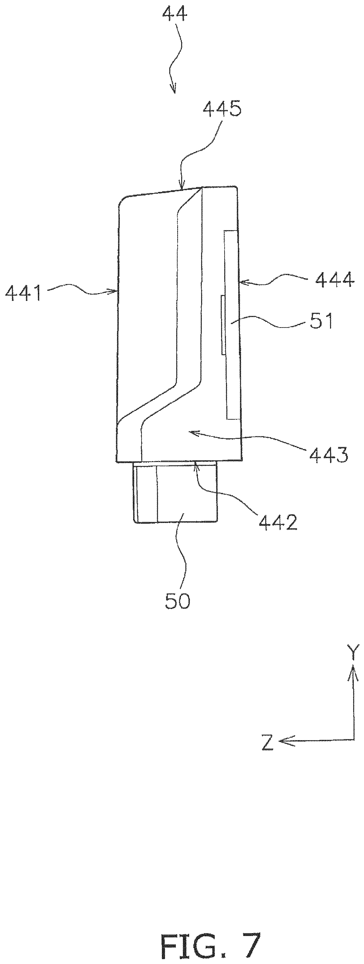

FIG. 4 is a perspective view of the engine control unit 44. FIG 5 is a front view of the engine control unit 44. FIG. 6 is a rear view of the engine control unit 44. FIG. 7 is a side view of the engine control unit 44. As shown in FIGS. 4 to 7, the engine control unit 44 is dimensioned to be greater in both a height direction (Y) thereof and a width direction (X) thereof than in a thickness direction (Z) thereof. The engine control unit 44 is dimensioned to be greater in the width direction (X) thereof than in the height direction (Y) thereof. The thickness direction (Z) of the engine control unit 44 herein refers to the extending direction of the smallest one of the dimensions of the engine control unit 44 in the three-dimensional Cartesian coordinate system (X, Y, Z).

The engine control unit 44 includes a first principal surface 441, a second principal surface 444, a first lateral surface 442, a second lateral surface 443, a third lateral surface 445 and a fourth lateral surface 446. The second principal surface 444 is located on the opposite side of the first principal surface 441. Each of the first and second principal surfaces 441 and 444 extends in the height direction (Y) and the width direction (X) of the engine control unit 44. Each of the first and second principal surfaces 441 and 444 has a shape dimensioned to be greater in the width direction (X) than in the height direction (Y).

Each of the first and third lateral surfaces 442 and 445 extends in the width direction (X) and the thickness direction (Z) of the engine control unit 44. Each of the first and third lateral surfaces 442 and 445 has a shape dimensioned to be greater in the width direction (X) than in the thickness direction (Z). Each of the second and fourth lateral surfaces 443 and 446 extends in the height direction (Y) and the thickness direction (Z) of the engine control unit 44. Each of the second and fourth lateral surfaces 443 and 446 has a shape dimensioned to be greater in the height direction (Y) than in the thickness direction (Z).

An area of the first principal surface 441 projected in a normal direction of the first principal surface 441 is greater than that of the first lateral surface 442 projected in a normal direction of the first lateral surface 442. The area of the first principal surface 441 projected in the normal direction of the first principal surface 441 is also greater than that of the second lateral surface 443 projected in a normal direction of the second lateral surface 443. It should be noted that the second principal surface 444 has a projected area similar to that of the first principal surface 441. The third lateral surface 445 has a projected area similar to that of the first lateral surface 442. The fourth lateral surface 446 has a projected area similar to that of the second lateral surface 443.

As shown in FIG 5, the engine control unit 44 includes a command unit 46 and a regulator 47. The command unit 46 outputs a command signal to the engine 34. The regulator 47 is connected to the starter motor 36. The regulator 47 rectifies the electricity generated by the starter motor 36 and controls the voltage of the electricity. The command unit 46 and the regulator 47 are disposed in alignment in the width direction (X) of the engine control unit 44.

The engine control unit 44 includes a plurality of connectors 48 to 50. The plural connectors 48 to 50 are attached to the first lateral surface 442. The plural connectors 48 to 50 are disposed in alignment in the width direction (X) of the engine control unit 44. The plural connectors 48 to 50 protrude from the first lateral surface 442.

The plural connectors 48 to 50 include a first connector 48, a second connector 49 and a third connector 50. The first connector 48 is connected to the command unit 46. The second and third connectors 49 and 50 are connected to the regulator 47.

The engine control unit 44 includes a first attachment portion 51 and a second attachment portion 52. The first and second attachment portions 51 and 52 are provided on the both lateral surfaces of the engine control unit 44. The first attachment portion 51 protrudes from the second lateral surface 443. The second attachment portion 52 protrudes from the fourth lateral surface 446. The first and second attachment portions 51 and 52 include holes 511 and 521 that bolts are inserted therethrough, respectively.

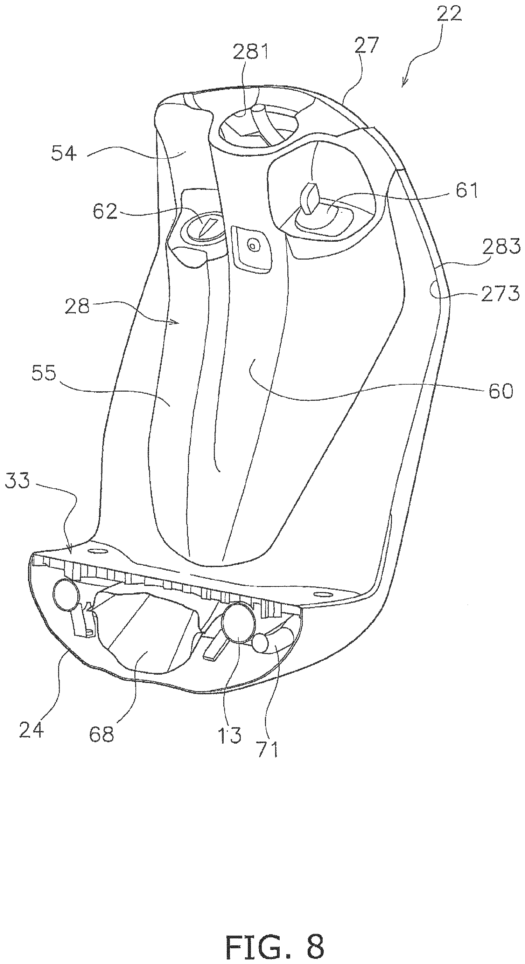

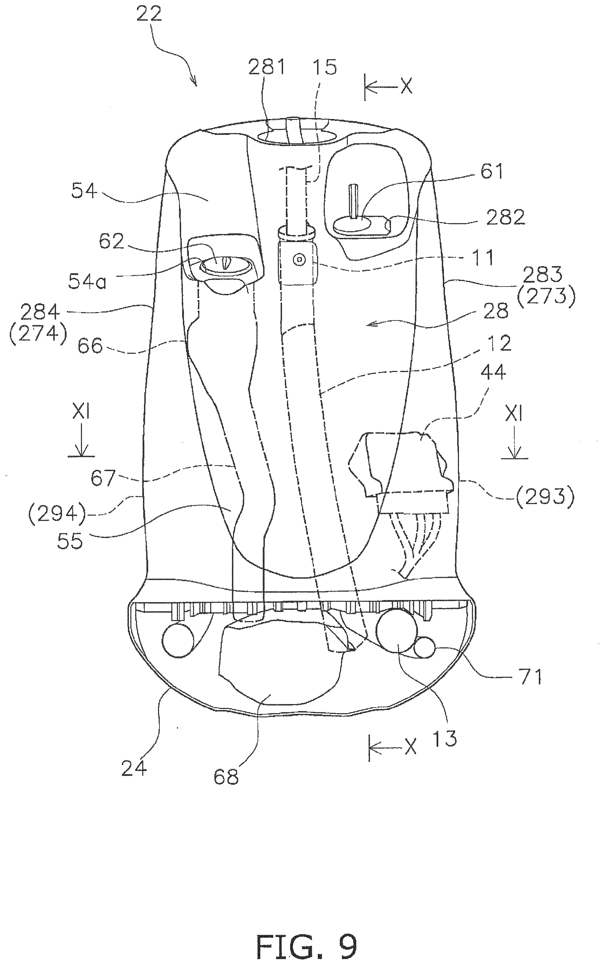

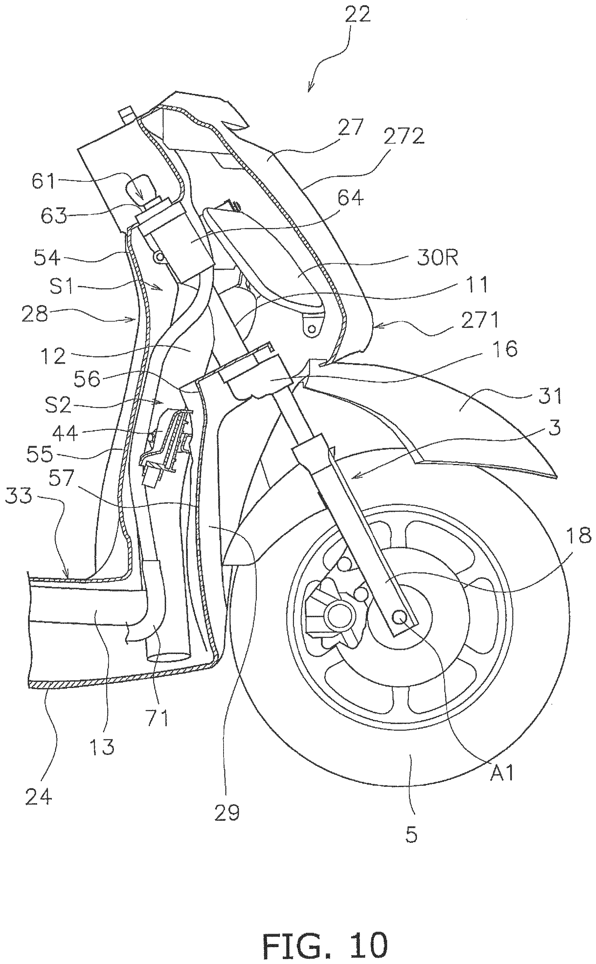

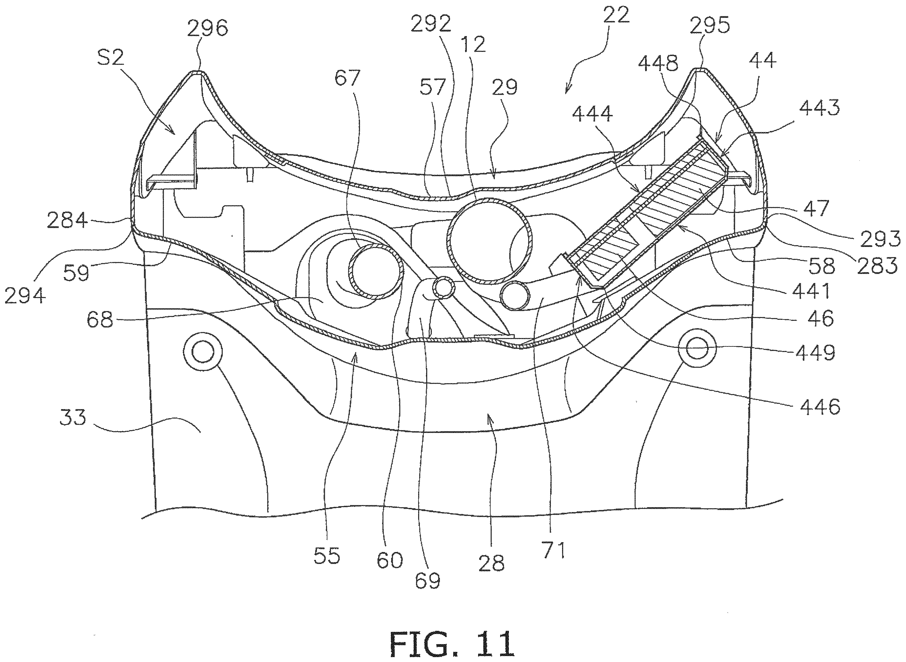

The engine control unit 44 is disposed in the aforementioned inner space of the front body cover 22. FIG 8 is a perspective view of the front body cover 22. FIG. 9 is a rear view of the front body cover 22. FIG. 10 is a cross-sectional view of FIG 9 taken along line X-X. FIG. 11 is a cross-sectional view of FIG 9 taken along line XI-XI. FIG 11 shows a cross section taken orthogonally to the up-and-down direction to include the control unit 44.

As shown in FIGS. 8 to 11, the back cover 28 includes the upper portion 54 and a lower portion 55. The upper portion 54 is located above the front end 271 of the front cover 27. The upper portion 54 is disposed behind the head pipe 11 and the steering shaft 15. As shown in FIG. 10, the front body cover 22 includes a first storage space S1 and a second storage space S2. The first storage space S1 is provided between the upper portion 54 and the front cover 27. The first storage space S1 is formed in front of the upper portion 54 and behind the front cover 27. The second storage space S2 is provided between the lower portion 55 and the bottom cover 29. The second storage space S2 is formed in front of the lower portion 55 and behind the bottom cover 29.

As seen in a vehicle rear view, the upper portion 54 overlaps the head pipe 11 and the steering shaft 15. As shown in FIG. 8, the upper portion 54 includes an opening 281 in the upper surface thereof. The steering shaft 15 is inserted through the opening 281. The lower portion 55 is located below the front end 271 of the front cover 27. The lower portion 55 is connected at the lower end thereof to the flat footboard 33. As seen in a vehicle side view, the lower portion 55 extends backward and downward. The lower portion 55 is disposed behind the bottom cover 29. As seen in the vehicle rear view, the lower portion 55 overlaps at least part of the bottom cover 29. The lower portion 55 is disposed behind the front fender 31 and the front wheel 5. The lower portion 55 is disposed behind the bottom cover 29. As seen in the vehicle rear view, the lower portion 55 overlaps at least part of the front fender 31 and the front wheel 5.

As shown in FIG. 10, the bottom cover 29 is disposed between the front wheel 5 and the back cover 28. In other words, the bottom cover 29 is disposed behind the front wheel 5 and in front of the back cover 28. The bottom cover 29 includes an upper wall portion 56 and a lower wall portion 57. The upper wall portion 56 extends backward and upward. The under bracket 16 is disposed in front of the upper wall portion 56. The upper wall portion 56, at least in part, is disposed between the under bracket 16 and the down frame 12. In other words, the upper wall portion 56, at least in part, is disposed behind the under bracket 16 and in front of the down frame 12. As seen in the vehicle rear view, the upper wall portion 56 overlaps the under bracket 16. As seen in the vehicle side view, the upper wall portion 56 overlaps the down frame 12.

The lower wall portion 57 is disposed directly below the upper wall portion 56. As seen in the vehicle side view, the lower wall portion 57 has a backwardly recessed shape. The lower wall portion 57 is disposed behind the front wheel 5. As seen in the vehicle rear view, the lower wall portion 57 overlaps the front wheel 5.

The lower wall portion 57 of the bottom cover 29 extends rightward and forward from a middle portion 292, located in the middle of the bottom cover 29 in the vehicle width direction, to a right front edge 295, and then extends rightward and backward to a right end edge 293. The right end edge 293 of the lower wall portion 57 is connected to the right end edge 283 of the back cover 28 (the lower portion 55).

The lower wall portion 57 of the bottom cover 29 extends leftward and forward from the middle portion 292, located in the middle of the bottom cover 29 in the vehicle width direction, to a left front edge 296, and then extends leftward and backward to a left end edge 294. The left end edge 294 of the lower wall portion 57 is connected to the left end edge 284 of the back cover 28 (the lower portion 55).

As shown in FIG 11, the lower wall portion 57 has a backwardly recessed shape as seen in a vehicle plan view. The lower portion 55 of the back cover 28 includes a first lateral portion 58, a second lateral portion 59 and the middle portion 60. The middle portion 60 is located between the first lateral portion 58 and the second lateral portion 59 in the vehicle width direction. The middle portion 60 has a backwardly protruding shape. The first lateral portion 58 is located rightward of the middle portion 60. The first lateral portion 58 is located forward of the middle portion 60. The second lateral portion 59 is located leftward of the middle portion 60. The second lateral portion 59 is located forward of the middle portion 60. In other words, the middle portion 60 is located leftward of the first lateral portion 58, while being located rightward of the second lateral portion 59. With the lower portion 55 shaped as described above, a space for putting the feet of a rider is expanded on the flat footboard 33.

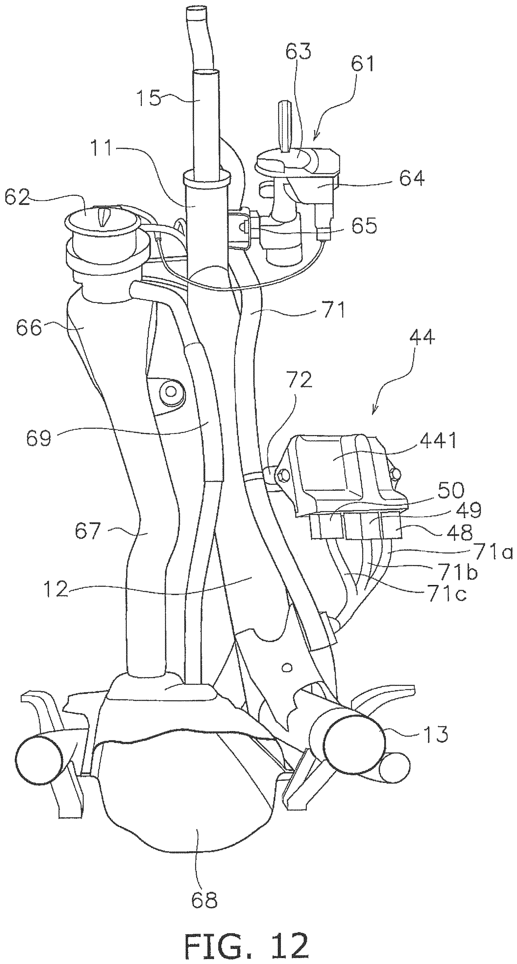

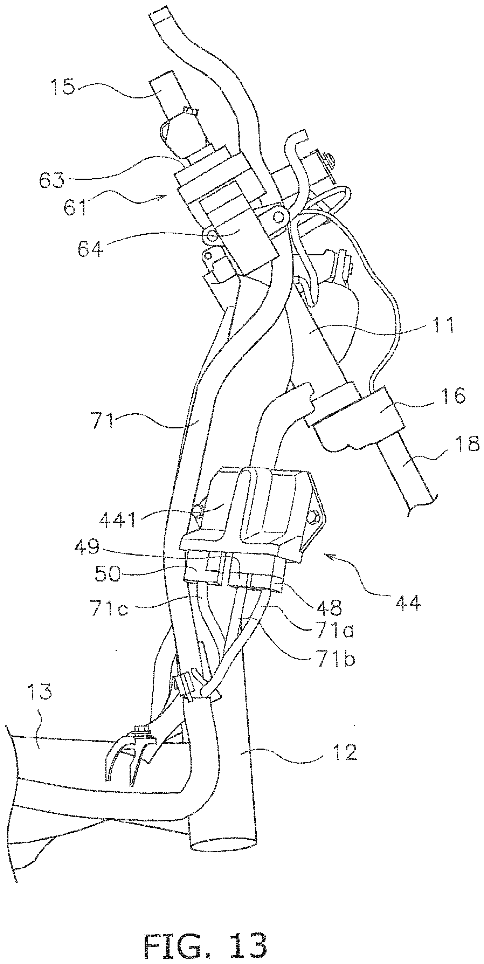

As shown in FIG. 9, the upper portion 54 includes a main switch 61. The back cover 28 includes an oil supply port 62. FIG 12 is a rear view of a structure in the interior of the front body cover 22. FIG 13 is a side view of the structure in the interior of the front body cover 22.

The main switch 61 is disposed rightward of the vehicle center in the vehicle width direction. The oil supply port 62 is disposed leftward of the vehicle center in the vehicle width direction. The main switch 61 is disposed rightward of the down frame 12. The oil supply port 62 is disposed leftward of the down frame 12.

As shown in FIGS. 12 and 13, the main switch 61 includes an operating surface 63 and a switch body 64. The operating surface 63 is disposed to be exposed to the outside through an opening 282 provided in the upper portion 54. The switch body 64 is disposed directly below the operating surface 63. The switch body 64 is disposed inside the first storage space S1. The switch body 64 is attached to the head pipe 11 through a bracket 65.

The oil supply port 62 is disposed to be exposed to the outside through an opening 54a provided in the upper portion 54. The oil supply port 62 is connected to a sub-tank 66. The sub-tank 66 is disposed directly below the oil supply port 62. The sub-tank 66 is disposed inside the first storage space S1. The sub-tank 66 is disposed leftward of the down frame 12. As seen in the vehicle side view, the sub-tank 66 overlaps the down frame 12. The sub-tank 66 is connected to a fuel tank 68 through a fuel pipe 67.

The fuel pipe 67 extends downward from the sub-tank 66, while passing through the second storage space S2. The fuel pipe 67 is disposed leftward of the down frame 12. As seen in the vehicle side view, the fuel pipe 67 overlaps the down frame 12. The fuel tank 68 is disposed directly below the flat footboard 33. The oil supply port 62 and the fuel tank 68 are connected to each other through a sub-pipe 69. The sub-pipe 69 extends downward from the oil supply port 62, while passing through the second storage space S2. The sub-pipe 69, at least in part, is disposed leftward of the down frame 12. The sub-pipe 69, at least in part, overlaps the down frame 12 as seen in the vehicle side view.

It should be noted that a harness 71 is disposed along the down frame 12 and the head pipe 11. The harness 71, at least in part, is disposed rightward of the down frame 12. The harness 71, at least in part, overlaps the down frame 12 as seen in the vehicle side view. The harness 71 is connected to a variety of electronic devices installed in the straddled vehicle 1. For example, the harness 71 is connected to the starter motor 36. The harness 71 is connected to the main switch 61. The harness 71 is connected to the flasher lights 30R and 30L. The harness 71 is connected to the meter panel 25 and the headlight 26. The harness 71 is connected to the engine control unit 44.

The engine control unit 44 is disposed in the second storage space S2. As shown in FIG. 9, in the second storage space S2, the engine control unit 44 is disposed rightward of the vehicle center in the vehicle width direction. Therefore, the main switch 61 and the engine control unit 44 are both disposed on one of the right and left sides of the vehicle center in the vehicle width direction. The engine control unit 44 is disposed below the main switch 61. In the second storage space S2, the engine control unit 44 is disposed rightward of the down frame 12.

As shown in FIG 3, the engine control unit 44, at least in part, is located below the upper end of the front wheel 5 at a standstill. The term "standstill" herein refers to a state that the straddled vehicle 1 stands still without a rider riding thereon, while the up-and-down direction thereof is oriented along the vertical direction. The engine control unit 44, at least in part, is located below the under bracket 16. As shown in FIGS. 3 and 11, a front end 448 of the engine control unit 44 is located forward of the down frame 12. The engine control unit 44, at least in part, overlaps the down frame 12 as seen in the vehicle side view.

As shown in FIG. 12, the engine control unit 44 is attached to the down frame 12 through a stay 72. The stay 72 protrudes sideward from the down frame 12. The first and second attachment portions 51 and 52 of the engine control unit 44 are attached to the stay 72. The engine control unit 44 is disposed such that the connectors 48 to 50 thereof are directed downward. The harness 71 is disposed to pass through a lateral side of the engine control unit 44. Cables 71a, 71b and 71c, branched from the harness 71, are connected to the connectors 48 to 50 of the engine control unit 44, respectively.

As shown in FIG. 10, the engine control unit 44 is disposed between the lower portion 55 of the back cover 28 and the bottom cover 29. The engine control unit 44 is disposed in front of the lower portion 55 of the back cover 28 and behind the bottom cover 29. As seen in the vehicle rear view, the engine control unit 44 overlaps the bottom cover 29. As seen in the vehicle rear view, the engine control unit 44, at least in part, overlaps the upper wall portion 56 of the bottom cover 29. As seen in the vehicle rear view, the engine control unit 44, at least in part, overlaps the lower wall portion 57 of the bottom cover 29. The first principal surface 441 of the engine control unit 44 is disposed obliquely to the vehicle up-and-down direction. The engine control unit 44 is disposed such that the first principal surface 441 thereof extends forward and upward.

As shown in FIG. 11, the engine control unit 44 is disposed such that the thickness direction thereof is arranged obliquely to the vehicle back-and-forth direction as seen in the vehicle plan view. The first principal surface 441 of the engine control unit 44 is disposed obliquely to the vehicle back-and-forth direction. The engine control unit 44 is disposed such that the first principal surface 441 thereof extends forward and outward in the vehicle width direction. The second principal surface 444 of the engine control unit 44 is disposed obliquely to the vehicle back-and-forth direction. The engine control unit 44 is disposed such that the second principal surface 444 thereof extends forward and outward in the vehicle width direction.

A cross section taken orthogonally to the up-and-down direction to include the engine control unit 44 is a cross section in which the engine control unit 44 is included and that is one of the cross sections taken orthogonally to the up-and-down direction. On the cross section in which the engine control unit 44 is included and that is one of the cross sections taken orthogonally to the up-and-down direction, a rear end 449 of the engine control unit 44 is disposed inside the front end 448 of the engine control unit 44 in the vehicle width direction. Additionally, on the cross section in which the engine control unit 44 is included and that is one of the cross sections taken orthogonally to the up-and-down direction, the fourth lateral surface 446 (rear lateral surface) of the engine control unit 44 is disposed inside the second lateral surface 443 (front lateral surface) of the engine control unit 44 in the vehicle width direction. On the cross section in which the engine control unit 44 is included and that is one of the cross sections taken orthogonally to the up-and-down direction, the right and left end edges 283 and 284 of the back cover 28 are located forward of the middle portion 60 located in the middle of the back cover 28 in the vehicle width direction.

The rear end 449 of the engine control unit 44 is located backward of the right and left end edges 283 and 284 of the back cover 28. On the cross section in which the engine control unit 44 is included and that is one of the cross sections taken orthogonally to the up-and-down direction, the front end 448 of the engine control unit 44 is located forward of the right and left end edges 283 and 284 of the back cover 28.

On the cross section in which the engine control unit 44 is included and that is one of the cross sections taken orthogonally to the up-and-down direction, the rear end 449 of the engine control unit 44 is located backward of the middle portion 292 located in the middle of the bottom cover 29 in the vehicle width direction. On the cross section in which the engine control unit 44 is included and that is one of the cross sections taken orthogonally to the up-and-down direction, the front end 448 of the engine control unit 44 is located forward of the middle portion 292 located in the middle of the bottom cover 29 in the vehicle width direction.

In the straddled vehicle 1 according to the present preferred embodiment explained above, the engine control unit 44 is disposed in the second storage space S2 inside the front body cover 22. Hence, reduction in capacity of the storage box 32 can be inhibited in comparison with when the engine control unit 44 is disposed laterally to the storage box 32. Additionally, the engine control unit 44 is disposed such that the thickness direction thereof is arranged obliquely to the vehicle back-and-forth direction as seen in the vehicle plan view. Hence, increase in size of the front body cover 22 can be inhibited. Consequently, increase in size of the straddled vehicle 1 can be avoided, while deterioration in both ride comfort and getting on/off performance can be inhibited.

The engine control unit 44 is disposed rightward of the down frame 12 in the second storage space S2. Therefore, the front body cover 22 can be inhibited from being enlarged backward in comparison with when the engine control unit 44 is disposed directly backward of the down frame 12. Consequently, increase in size of the straddled vehicle 1 can be avoided, while deterioration in both ride comfort and getting on/off performance can be inhibited.

The engine control unit 44, at least in part, overlaps the down frame 12 as seen in the vehicle side view. Therefore, the down frame 12 and the engine control unit 44 can be compactly disposed in the back-and-forth direction. Accordingly, the front body cover 22 can be inhibited from being enlarged backward. Consequently, increase in size of the straddled vehicle 1 can be avoided, while deterioration in both ride comfort and getting on/off performance can be inhibited.

The front end 448 of the engine control unit 44 is located forward of the down frame 12. Therefore, the front body cover 22 can be inhibited from being enlarged backward. Accordingly, deterioration in both ride comfort and getting on/off performance can be inhibited.

The engine control unit 44, at least in part, is located below the under bracket 16. Therefore, it is possible to easily avoid a situation that the engine control unit 44 interferes with the movable range of the under bracket 16.

The engine control unit 44, at least in part, is located below the upper end of the front wheel 5 at a standstill. Therefore, the engine control unit 44 is disposed in as a low position as possible. Accordingly, a large space can be reliably produced above the engine control unit 44.

On the cross section in which the engine control unit 44 is included and that is one of the cross sections taken orthogonally to the up-and-down direction, the right end edge 283 and the left end edge 284 of the back cover 28 are located forward of the middle portion 60 located in the middle of the back cover 28 in the vehicle width direction. Therefore, it is possible to expand a space located behind the right end edge 283 and the left end edge 284 of the back cover 28. Accordingly, it is possible to enhance both ride comfort and getting on/off performance.

The front end 271 of the front cover 27 is located backward of the rotational axle A1 of the front wheel 5. In this case, the first storage space S1 is narrow. Hence, the engine control unit 44 according to the present preferred embodiment works as effectively as possible.

The engine control unit 44 includes the regulator 47. In this case, the engine control unit 44 is increased in size. Hence, the engine control unit 44 according to the present preferred embodiment works as effectively as possible.

In the second storage space S2, the engine control unit 44 and the oil supply port 62 are disposed oppositely on the right and left sides of the vehicle center in the vehicle width direction. Therefore, the engine control unit 44 can be disposed without narrowing the space for disposing the oil supply port 62.

The main switch 61 and the engine control unit 44 are both disposed on one of the right and left sides of the vehicle center in the vehicle width direction. The engine control unit 44 is disposed directly below the main switch 61. Therefore, the engine control unit 44 and the main switch 61 can be compactly disposed. Additionally, the engine control unit 44 can be disposed without narrowing the space for disposing the main switch 61.

The engine control unit 44 is disposed such that the connectors 48 to 50 thereof are directed downward. Therefore, water intrusion into the connectors 48 to 50 can be inhibited. Accordingly, even when disposed in a low position, the engine control unit 44 can be inhibited from being affected by water.

One preferred embodiment of the present invention has been explained above. However, the present invention is not limited to the aforementioned preferred embodiment, and a variety of changes can be made without departing from the present invention, defined by the appended claims.

The straddled vehicle 1 is not limited to a scooter-type vehicle, and alternatively, may be another type of vehicle such as a moped. The number of front wheels is not limited to one, and alternatively, may be two or greater. Instead of this, the number of rear wheels is not limited to one, and alternatively, may be two or greater. The engine 34 is not limited to an internal combustion engine, and alternatively, may be an electric motor.

The structure of the engine control unit 44 is not limited to that in the aforementioned preferred embodiment. For example, the number of connectors of the engine control unit 44 is not limited to three, and alternatively, may be less than three or may be greater than three. In the engine control unit 44, the connectors may not be necessarily disposed on the lower surface, and alternatively, may be disposed on another surface.

The engine control unit 44 may not include the regulator. The engine control unit 44 may have a control function such as an idling stop function. The idling stop function is a function to automatically stop the engine 34 when the vehicle stops moving and to automatically restart the engine 34 when the vehicle starts moving. When having such a control function as described above, the engine control unit 44 tends to be increased in size. Therefore, the engine control unit 44 according to the aforementioned preferred embodiment works effectively.

The layout of the engine control unit 44 is not limited to that in the aforementioned preferred embodiment. For example, the engine control unit 44 may be disposed leftward of the vehicle center in the vehicle width direction. The main switch 61 may be disposed leftward of the vehicle center in the vehicle width direction. The oil supply port 62 may be disposed rightward of the vehicle center in the vehicle width direction.

The engine control unit 44 may entirely overlap the down frame 12 as seen in the vehicle side view. The engine control unit 44 may be only in part located below the under bracket 16. The engine control unit 44 may be entirely located below the upper end of the front wheel 5 at a standstill.

The front cover 27 may include the headlight 26. In this case, the headlight 26 may compose the front end 271 of the front cover 27. The configuration to split the front body cover 22 may be arbitrarily set depending on a vehicle body design and/or a manufacturing condition. For example, the front cover 27 may be composed of a plurality of components, or alternatively, one of a plurality of components may compose at least part of the front cover 27 and at least part of the back cover 28.

## Claims

1. A straddled vehicle (1) comprising:
a vehicle body frame (2) including a head pipe (11);
an engine (34) supported by the vehicle body frame (2);
a steering device (3) supported by the head pipe (11), the steering device (3) including a front wheel (5), the front wheel (5) being disposed below the head pipe (11);
a storage box (32) supported by the vehicle body frame (2), the storage box (32) being disposed backward of the front wheel (5);
a seat (6) disposed directly above the storage box (32);
an exterior cover (4) at least in part overlapping the vehicle body frame (2) as seen in a front view; and
an engine control unit (44) controlling the engine (34), wherein
the exterior cover (4) includes
a front cover (27) disposed in front of the head pipe (11),
a back cover (28) disposed behind the head pipe (11),
a bottom cover (29) disposed behind the front wheel (5) and in front of the back cover (28), and
a flat footboard (33) extending backward from a lower end of the back cover (28),
the back cover (28) includes
an upper portion (54) located above a front end of the front cover (27), and
a lower portion (55) located below the front end of the front cover (27),
the exterior cover (4) includes
a first storage space (S1) formed in front of the upper portion (54) and behind the front cover (27), and
a second storage space (S2) formed in front of the lower portion (55) and behind the bottom cover (29),
the engine control unit (44) has a shape dimensioned to be greater in both a width direction thereof and a length direction thereof than in a thickness direction thereof, and
the engine control unit (44) is disposed on one of right and left sides of a vehicle center in a vehicle width direction,
**characterized in that**
the engine control unit (44) is disposed in the second storage space (S2), and
the engine control unit (44) is disposed such that the thickness direction thereof is arranged obliquely to a vehicle back-and-forth direction as seen in a vehicle plan view, and, on a cross section taken orthogonally to an up-and-down direction to include the engine control unit (44), a rear end of the engine control unit (44) is disposed further inward in the vehicle width direction than a front end of the engine control unit.

2. The straddled vehicle (1) according to claim 1, wherein
the vehicle body frame (2) further includes a down frame (12) extending downward from the head pipe (11), and
the engine control unit (44) is disposed either rightward or leftward of the down frame (12) in the second storage space (S2).

3. The straddled vehicle (1) according to claim 2, wherein the engine control unit (44) at least in part overlaps the down frame (12) in a vehicle side view.

4. The straddled vehicle (1) according to claim 2 or 3, wherein the front end of the engine control unit (44) is located forward of the down frame (12).

5. The straddled vehicle (1) according to any of claims 1 to 4, wherein
the steering device (3) includes
a pair of right and left suspensions (8,17), and
an under bracket (16) supporting the pair of right and left suspensions (8,17), and
the engine control unit (44) at least in part is located below the under bracket (16).

6. The straddled vehicle (1) according to any of claims 1 to 5, wherein the engine control unit (44) at least in part is located below an upper end of the front wheel (5) at a standstill.

7. The straddled vehicle (1) according to any of claims 1 to 6, wherein, on the cross section taken orthogonally to the up-and-down direction to include the engine control unit (44), a lateral end portion (58,59) of the back cover (28) is located further forward than a portion (60) located in the middle, in the vehicle width direction, of the back cover (28).

8. The straddled vehicle (1) according to any of claims 1 to 7, wherein the front end of the front cover (27) is located backward of a rotational axle of the front wheel (5).

9. The straddled vehicle (1) according to any of claims 1 to 8, wherein the engine control unit (44) includes a regulator (47),

10. The straddled vehicle (1) according to any of claims 1 to 9, wherein
the back cover (28) includes an oil supply port (62),
the engine control unit (44) is disposed on one of the right and left sides of the vehicle center in the vehicle width direction in the second storage space (S2), and
the oil supply port (62) is disposed on the other of the right and left sides of the vehicle center in the vehicle width direction.

11. The straddled vehicle (1) according to any of claims 1 to 10, wherein
the upper portion (54) includes a main switch (61), and
the main switch (61) and the engine control unit (44) are both disposed on one of the right and left sides of the vehicle center in the vehicle width direction.

12. The straddled vehicle (1) according to any of claims 1 to 11, wherein
the engine control unit (44) includes a connector (48-50), and
the engine control unit (44) is disposed such that the connector (48-50) is directed downward.

13. The straddled vehicle (1) according to any of claims 1 to 12, wherein the front cover (27) extends backward and upward from the front end thereof as seen in the/a vehicle side view.

## Patentansprüche

1. Spreizsitz-Fahrzeug (1), das umfasst:
einen Fahrzeug-Karosserierahmen (2), der ein Steuerrohr (11) enthält;
einen Motor (34), der von dem Fahrzeug-Karosserierahmen (2) getragen wird;
eine Lenkeinrichtung (3), die von dem Steuerrohr (11) getragen wird, wobei die Lenkeinrichtung (3) ein Vorderrad (5) enthält und das Vorderrad (5) unterhalb des Steuerrohrs (11) angeordnet ist;
einen Aufbewahrungskasten (32), der von dem Fahrzeug-Karosserierahmen(2) getragen wird, wobei der Aufbewahrungskasten (32) hinter dem Vorderrad (5) angeordnet ist;
einen Sitz (6), der direkt oberhalb des Aufbewahrungskastens (32) angeordnet ist;
eine äußere Verkleidung (4), die den Fahrzeug-Karosserierahmen(2), in einer Vorderansicht gesehen, wenigstens teilweise überlappt; sowie
eine Motorsteuerungs-Einheit (44), die den Motor (34) steuert, wobei
die äußere Verkleidung (4) einschließt
eine vordere Verkleidung (27), die vor dem Steuerrohr (11) angeordnet ist,
eine hintere Verkleidung (28), die hinter dem Steuerrohr (11) angeordnet ist
eine untere Verkleidung (29), die hinter dem Vorderrad (5) und vor der hinteren Verkleidung (28) angeordnet ist, sowie
ein flaches Trittbrett (33), das sich von einem unteren Ende der hinteren Verkleidung (28) nach hinten erstreckt,
wobei die hintere Verkleidung (28) enthält
einen oberen Abschnitt (54), der sich oberhalb eines vorderen Endes der vorderen Verkleidung (27) befindet, sowie
einen unteren Abschnitt (55), der sich unterhalb des vorderen Endes der vorderen Verkleidung (27) befindet, und
wobei die äußere Verkleidung (4) enthält
einen ersten Aufbewahrungsraum (S1), der vor dem oberen Abschnitt (54) und hinter der vorderen Verkleidung (27) ausgebildet ist, sowie
einen zweiten Aufbewahrungsraum (S2), der vor dem unteren Abschnitt (55) und hinter der vorderen Verkleidung (29) ausgebildet ist, und
wobei die Motorsteuerungs-Einheit (44) eine Form hat, die so dimensioniert ist, dass sie sowohl in ihrer Breitenrichtung als auch in ihrer Längsrichtung größer ist als in ihrer Dickenrichtung, und
die Motorsteuerungs-Einheit (44) an der rechten oder der linken Seite einer Fahrzeugmitte in einer Fahrzeug-Breitenrichtung angeordnet ist,
**dadurch gekennzeichnet, dass**
die Motorsteuerungs-Einheit (44) in dem zweiten Aufbewahrungsraum (S2) angeordnet ist, und
die Motorsteuerungs-Einheit (44) so angeordnet ist, dass ihre Dickenrichtung, in einer Fahrzeug-Draufsicht gesehen, schräg zu einer Fahrzeug-Längsrichtung angeordnet ist, und, in einem Querschnitt im rechten Winkel zu einer vertikalen Richtung, der die Motorsteuerungs-Einheit (44) einschließt, ein hinteres Ende der Motorsteuerungs-Einheit (44), in der Fahrzeug-Breitenrichtung, weiter innen angeordnet ist als ein vorderes Ende der Motorsteuerungs-Einheit.

2. Spreizsitz-Fahrzeug (1) nach Anspruch 1, wobei
der Fahrzeug-Karosserierahmen(2) des Weiteren einen nach unten gerichteten Rahmen (12) enthält, der sich von dem Steuerrohr (11) nach unten erstreckt, und
die Motorsteuerungs-Einheit (44) entweder rechts oder links von dem nach unten gerichteten Rahmen (12) in dem zweiten Aufbewahrungsraum (S2) angeordnet ist.

3. Spreizsitz-Fahrzeug (1) nach Anspruch 2, wobei die Motorsteuerungs-Einheit (44) den nach unten gerichteten Rahmen (12) in einer Fahrzeug-Seitenansicht wenigstens teilweise überlappt.

4. Spreizsitz-Fahrzeug (1) nach Anspruch 2 oder 3, wobei sich das vordere Ende der Motorsteuerungs-Einheit (44) vor dem nach unten gerichteten Rahmen (12) befindet.

5. Spreizsitz-Fahrzeug (1) nach einem der Ansprüche 1 bis 4, wobei
die Lenkeinrichtung (3) enthält
ein Paar aus einer rechten und einer linken Aufhängung (8, 17), sowie
einen unteren Halter (16), der das Paar aus rechter und linker Aufhängung (8, 17) trägt, und
die Motorsteuerungs-Einheit (44) wenigstens teilweise unterhalb des unteren Halters (16) angeordnet ist.

6. Spreizsitz-Fahrzeug (1) nach einem der Ansprüche 1 bis 5, wobei die Motorsteuerungs-Einheit (44) in einem Stillstand wenigstens teilweise unterhalb eines oberen Endes des Vorderrades (5) angeordnet ist.

7. Spreizsitz-Fahrzeug (1) nach einem der Ansprüche 1 bis 6, wobei in dem Querschnitt im rechten Winkel zu der vertikalen Richtung, der die Motorsteuerungs-Einheit (44) einschließt, ein seitlicher Endabschnitt (58, 59) der hinteren Verkleidung (28) weiter vorn angeordnet ist als ein Abschnitt (60), der, in der Fahrzeug-Breitenrichtung, in der Mitte der hinteren Verkleidung (28) angeordnet ist.

8. Spreizsitz-Fahrzeug (1) nach einem der Ansprüche 1 bis 7, wobei das vordere Ende der vorderen Verkleidung (27) hinter einer Drehachse des Vorderrades (5) angeordnet ist.

9. Spreizsitz-Fahrzeug (1) nach einem der Ansprüche 1 bis 8, wobei die Motorsteuerungs-Einheit (44) einen Regler (47) enthält.

10. Spreizsitz-Fahrzeug (1) nach einem der Ansprüche 1 bis 9, wobei
die hintere Verkleidung (28) einen Öl-Zufuhranschluss (62) enthält,
die Motorsteuerungs-Einheit (44) an der rechten oder der linken Seite der Fahrzeugmitte in der Fahrzeug-Breitenrichtung in dem zweiten Aufbewahrungsraum (S2) angeordnet ist, und
der Öl-Zufuhranschluss (62) an der anderen von der rechten und der linken Seite der Fahrzeugmitte in der Fahrzeug-Breitenrichtung angeordnet ist.

11. Spreizsitz-Fahrzeug (1) nach einem der Ansprüche 1 bis 10, wobei
der obere Abschnitt (54) einen Hauptschalter (61) enthält, und
der Hauptschalter (61) sowie die Motorsteuerungs-Einheit (44) beide an der rechten oder der linken Seite der Fahrzeugmitte in der Fahrzeug-Breitenrichtung angeordnet sind.

12. Spreizsitz-Fahrzeug (1) nach einem der Ansprüche 1 bis 11, wobei
die Motorsteuerungs-Einheit (44) einen Verbinder (48-50) enthält, und
die Motorsteuerungs-Einheit (44) so angeordnet ist, dass der Verbinder (48-50) nach unten gerichtet ist.

13. Spreizsitz-Fahrzeug (1) nach einem der Ansprüche 1 bis 12, wobei sich die vordere Verkleidung (27), in der/einer Fahrzeug-Seitenansicht gesehen, von ihrem vorderen Ende aus nach hinten und nach oben erstreckt.

## Revendications

1. Véhicule de type à enfourcher, comprenant :
un châssis de véhicule (2) comportant un tuyau de tête (11) ;
un moteur (34) supporté par le châssis du véhicule (2) ;
un dispositif de direction (3) supporté par le tuyau de tête (11), le dispositif de direction (3) comportant une roue avant (5), la roue avant (5) étant disposée en-dessous du tuyau de tête (11) ;
un coffre de rangement (32) supporté par le châssis du véhicule (2), le coffre de rangement (32) étant disposé à l'arrière de la roue avant (5) ;
un siège (6) disposé directement au-dessus du coffre de rangement (32) ;
un capot extérieur (4) recouvrant au moins en partie le châssis du véhicule (2) dans une vue frontale ;
et
une unité de commande moteur (44) contrôlant le moteur (34), où
le capot extérieur (4) comporte
un capot avant (27) disposé devant le tuyau de tête (11),
un capot arrière (28) disposé derrière le tuyau de tête (11),
un capot inférieur (29) disposé derrière la roue avant (5) et devant le capot arrière (28),
et
un marchepied plat (33) s'étendant vers l'arrière à partir d'une extrémité
inférieure du capot arrière (28),
le capot arrière (28) comporte
une partie supérieure (54) située au-dessus d'une extrémité frontale du capot frontal (27), et
une partie inférieure (55) située en dessous de l'extrémité frontale du capot frontal (27),
le capot extérieur (4) comporte
Un premier espace de rangement (S1) formé à l'avant de la partie supérieure (54) et à l'arrière du capot frontal (27), et
Un deuxième espace de rangement (S2) formé à l'avant de la partie inférieure (55) et à l'arrière du capot inférieur (29),
l'unité de commande moteur (44) est disposée sur l'un des côtés droit et gauche du centre du véhicule dans le sens de la largeur du véhicule,
**caractérisé en ce que**
l'unité de commande moteur (44) est disposée dans le second espace de rangement (S2), et
l'unité de commande moteur (44) est disposée de manière à ce que la direction de son épaisseur est disposée obliquement par rapport à la direction d'avant en arrière du véhicule telle qu'on le voit dans une vue en plan du véhicule, et, sur une section transversale prise orthogonalement à une direction de haut en bas pour inclure l'unité de commande moteur (44), une extrémité arrière de l'unité de commande moteur (44) est disposée plus vers l'intérieur dans le sens de la largeur du véhicule qu'une extrémité avant de l'unité de commande moteur.

2. Véhicule de type à enfourcher (1) selon la revendication 1, où
le châssis de véhicule (2) comprend en outre un cadre inférieur (12) s'étendant vers le bas à partir du tuyau de tête (11), et
l'unité de commande moteur (44) est disposée soit à droite soit à gauche du cadre inférieur (12) dans le deuxième espace de rangement (S2).

3. Véhicule de type à enfourcher (1) selon la revendication 2, où l'unité de commande moteur (44) recouvre au moins en partie le cadre inférieur (12) dans une vue latérale du véhicule.

4. Véhicule de type à enfourcher (1) selon la revendication 2 ou 3, où l'extrémité frontale de l'unité de commande moteur (44) est située en avant du cadre inférieur (12).

5. Véhicule de type à enfourcher (1) selon l'une quelconque des revendications 1 à 4, où
le dispositif de direction (3) comporte
une paire de suspensions droite et gauche (8,17), et
l'unité de commande moteur (44) est située au moins en partie en dessous du support inférieur (16).

6. Véhicule de type à enfourcher (1) selon l'une quelconque des revendications 1 à 5, où l'unité de commande moteur (44) est située au moins en partie en dessous une extrémité supérieure de la roue avant (5) à l'arrêt.

7. Véhicule de type à enfourcher (1) selon l'une quelconque des revendications 1 à 6, où, sur la section transversale prise orthogonalement à la direction de haut en bas pour inclure l'unité de commande moteur (44), une partie d'extrémité latérale (58, 59) du capot arrière (28) est située plus en avant qu'une partie (60) située au milieu, dans le sens de la largeur du véhicule, du capot arrière (28).

8. Véhicule de type à enfourcher (1) selon l'une quelconque des revendications 1 à 7, où l'extrémité avant du capot avant (27) est située à l'arrière d'un axe de rotation de la roue avant (5).

9. Véhicule de type à enfourcher (1) selon l'une quelconque des revendications 1 à 8, où l'unité de commande moteur (44) comporte un régulateur (47).

10. Véhicule de type à enfourcher (1) selon l'une quelconque des revendications 1 à 9, où
le capot arrière (28) comporte un orifice d'alimentation en huile (62),
l'unité de commande moteur (44) est disposée sur l'un des côtés droit et gauche du centre du véhicule dans le sens de la largeur du véhicule dans le second espace de rangement (S2), et
l'orifice d'alimentation en huile (62) est disposé sur l'autre des côtés droit et gauche du centre du véhicule dans le sens de la largeur du véhicule.

11. Véhicule de type à enfourcher (1) selon l'une quelconque des revendications 1 à 10, où
la partie supérieure (54) comporte un interrupteur principal (61), et
l'interrupteur principal (61) et l'unité de commande moteur (44) sont tous les deux disposés sur l'un des côtés droit et gauche du centre du véhicule dans le sens de la largeur du véhicule.

12. Véhicule de type à enfourcher (1) selon l'une quelconque des revendications 1 à 11, où
l'unité de commande moteur (44) comporte un connecteur (48-50), et
l'unité de commande moteur (44) est disposée de manière à ce que le connecteur (48-50) est dirigé vers le bas.

13. Véhicule de type à enfourcher (1) selon l'une quelconque des revendications 1 à 12, où le capot avant (27) s'étend vers l'arrière et vers le haut à partir de son extrémité avant comme présenté dans la vue de côté du/d'un véhicule.
